(19) Europäisches Patentamt / European Patent Office / Office européen des brevets

(11) **EP 2 884 315 A1**

## (12) EUROPEAN PATENT APPLICATION
published in accordance with Art. 153(4) EPC

(43) Date of publication:
**17.06.2015 Bulletin 2015/25**

(21) Application number: **13828645.5**

(22) Date of filing: **01.08.2013**

(51) Int Cl.:
**G02B 5/30** (2006.01)   **G02F 1/1333** (2006.01)
**G02F 1/13363** (2006.01)

(86) International application number:
**PCT/JP2013/070867**

(87) International publication number:
**WO 2014/024770 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:   **07.08.2012   JP 2012175471**

(71) Applicant: **Dexerials Corporation**
**Tokyo 141-0032 (JP)**

(72) Inventors:
• **HAYASHI Hiroshi**
  **Shinagawa-ku, Tokyo 141-0032 (JP)**
• **HORII Akihiro**
  **Shinagawa-ku, Tokyo 141-0032 (JP)**
• **ISHIMORI Taku**
  **Shinagawa-ku, Tokyo 141-0032 (JP)**
• **HOSOYA Ken**
  **Shinagawa-ku, Tokyo 141-0032 (JP)**
• **SUGATA Hiroshi**
  **Shinagawa-ku, Tokyo 141-0032 (JP)**

(74) Representative: **Müller-Boré & Partner**
**Patentanwälte PartG mbB**
**Friedenheimer Brücke 21**
**80639 München (DE)**

(54) **PHASE DIFFERENCE ELEMENT, TRANSPARENT CONDUCTIVE ELEMENT, INPUT DEVICE, DISPLAY DEVICE, AND ELECTRONIC INSTRUMENT**

(57)   A phase difference element that can suppress a change in retardation by tilt in a Z-axis direction has an in-plane retardation R0 and a retardation Rth in a thickness direction that satisfy $0.7 \times R0 \leq Rth \leq 1.3 \times R0$ (R0: $|Nx - Ny| \times d$, Rth: $|((Nx + Ny)/2) - Nz| \times d$, Nx: refractive index in width direction, Ny: refractive index in longitudinal direction, Nz: refractive index in thickness direction, and d: element thickness).

FIG. 1

A

B

**Description**

Technical Field

The present technique relates to a phase difference element, a transparent conductive element, an input device, a display device, and an electronic apparatus, and in particular, to a phase difference element used in an input device, a display device, and the like.

Background Art

In recent years, a phase difference film has been widely used in an image display field. The phase difference film is generally a stretched resin film which has been processed by uniaxial or biaxial stretching, and in which a size relation of three-dimensional refractive index (optical indicatrix) is controlled in accordance with a use condition (see Patent Literatures 1 and 2). For example, in a twisted nematic (TN) mode using high anisotropic liquid crystal molecules that are oriented horizontally in a plane, a phase difference film having an optical indicatrix is used so that an insufficient refractive index in a thickness direction is complemented, and in a vertical alignment (VA) mode using liquid crystal molecules that are used aligned vertically, a phase difference film having an optical indicatrix is used so that an excess refractive index in the thickness direction is decreased. These phase difference films serve as an optical compensation film for improving viewing angle characteristics of a liquid crystal display (LCD).

Citation List

Patent Literature

Patent Literature 1: Japanese Patent Application Laid-Open No. 2005-91598
Patent Literature 2: Japanese Patent Application Laid-Open No. 2005-99848

Summary of Invention

Technical Problem

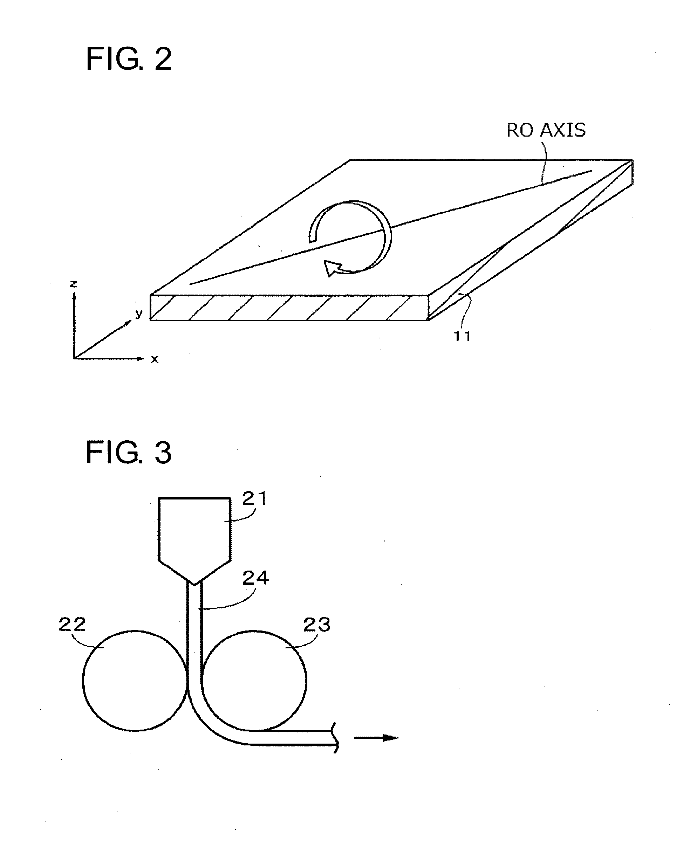

Recently, various phase difference films have been required with the spread of a mobile apparatus provided with an image display device. For example, a phase difference film capable of suppressing a change in retardation caused by tilting the film in a Z-axis direction (see FIG. 2) has been required. As one example of demand for suppressing a change in retardation caused by tilting in the Z-axis direction, application to a polarized sunglass has been desired with the spread of a mobile apparatus such as a smartphone and a tablet personal computer (PC) in recent years, and examples thereof may include suppression of remarkable degradation of visibility caused even by tilting a monitor in the Z-axis direction.

Therefore, it is an object of the present technique to provide a phase difference element that can suppress a change in retardation caused by tilting the element in a Z-axis direction, a transparent conductive element, an input device, a display device, and an electronic apparatus.

Solution to Problem

In order to achieve the object, a first technique is a phase difference element having an in-plane retardation R0 and a retardation Rth in a thickness direction that satisfy the following expression (1):

$$0.7 \times R0 \leq Rth \leq 1.3 \times R0 \quad (1),$$

R0: $|Nx - Ny| \times d$,
Rth: $|((Nx + Ny)/2) - Nz| \times d$
(Nx: refractive index in width direction, Ny: refractive index in longitudinal direction, Nz: refractive index in thickness direction, and d: element thickness).

A second technique is a transparent conductive element including:

a phase difference element, and

a transparent conductive layer, wherein

the phase difference element has an in-plane retardation R0 and an retardation Rth in a thickness direction that satisfy the following expression (1):

$$0.7 \times R0 \leq Rth \leq 1.3 \times R0 \quad (1),$$

R0: $|Nx - Ny| \times d$,

Rth: $|((Nx + Ny)/2) - Nz| \times d$

(Nx: refractive index in width direction, Ny: refractive index in longitudinal direction, Nz: refractive index in thickness direction, and d: element thickness).

A third technique is a method for producing a phase difference element, the method including compressing and stretching in a thickness direction of the element so that an in-plane retardation R0 and a retardation Rth in a thickness direction satisfy the following expression (1):

$$0.7 \times R0 \leq Rth \leq 1.3 \times R0 \quad (1),$$

R0: $|NX - Ny| \times d$,

Rth: $|((Nx + Ny)/2) - Nz| \times d$

(Nx: refractive index in width direction, Ny: refractive index in longitudinal direction, Nz: refractive index in thickness direction, and d: element thickness).

The phase difference element according to the first technique is suitably applied to a transparent conductive element, an input device, a display device, and an electronic apparatus. The transparent conductive element according to the second technique is suitably applied to an input device, a display device, and an electronic apparatus.

According to the present technique, the in-plane retardation R0 and the retardation Rth in a thickness direction satisfy the relation of $0.7 \times R0 \leq Rth \leq 1.3 \times R0$, and therefore a change in retardation caused by tilting in a Z-axis direction can be controlled within $\pm 30\%$.

Advantageous Effects of Invention

As described above, the present technique can suppress a change in retardation caused by tilting in a Z-axis direction.

Brief Description of the Drawings

FIG. 1A is a schematic cross-sectional view showing one example of a configuration of a phase difference film according to a first embodiment of the present technique. FIG. 1B is a perspective view showing one example of an overall shape of the phase difference film according to the first embodiment of the present technique.

FIG. 2 is a perspective view illustrating a definition of a tilt angle in a Z-axis direction.

FIG. 3 is a schematic view showing one example of a configuration of a film production device.

FIGs. 4A and 4B are schematic cross-sectional views showing a first modification of the first embodiment of the present technique. FIGs. 4C and 4D are schematic cross-sectional views showing a second modification of the first embodiment of the present technique.

FIG. 5 is a schematic cross-sectional view showing one example of a configuration of a touch panel according to the first embodiment of the present technique.

FIG. 6 is an external view showing one example of a television device as an electronic apparatus.

FIGs. 7A and 7B are external views showing one example of a digital camera as an electronic apparatus.

FIG. 8 is an external view showing one example of a note-type personal computer as an electronic apparatus.

FIG. 9 is an external view showing one example of a video camera as an electronic apparatus.

FIG. 10A is an external view showing one example of a mobile phone as an electronic apparatus. FIG. 10B is an external view showing one example of a tablet computer as an electronic apparatus.

FIG. 11 is a graph showing tilt angle-dependency of retardation of the phase difference films of Examples 1 to 5 and Comparative Examples 1 and 2.
FIG. 12 is a graph showing tilt angle-dependency of retardation of the phase difference films of Examples 1 to 3 and Comparative Example 1.
FIG. 13 is a graph showing results of simulation in Test Examples 1 and 2.

Description of Embodiments

Embodiments of the present technique will be described with reference to the drawings in the following order.

1. First embodiment (example of phase difference film)
2. Second embodiment (example of input device)
3. Third embodiment (example of electronic apparatus)

<1. First Embodiment>

[Configuration of Phase difference film]

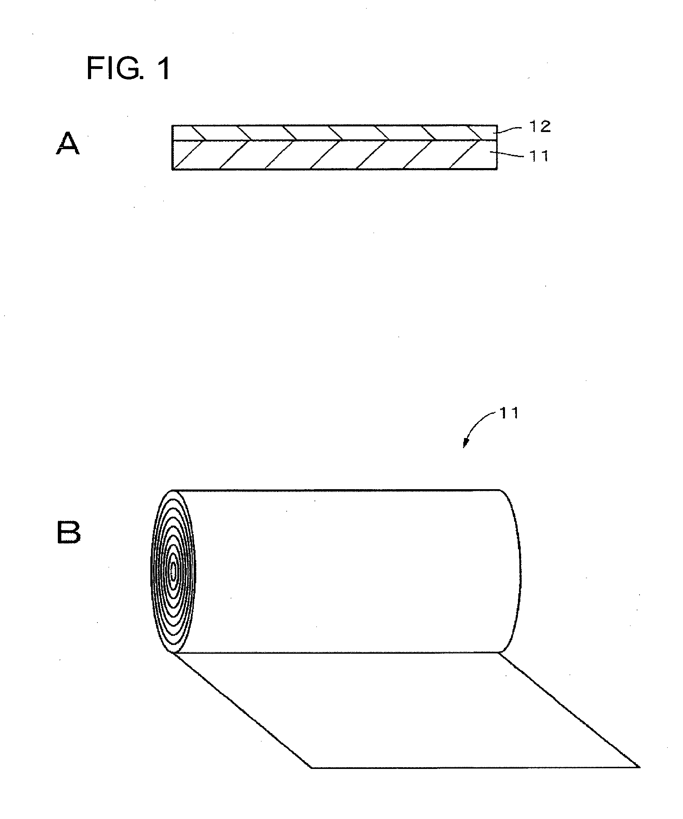

FIG. 1A is a schematic cross-sectional view showing one example of a configuration of a phase difference film according to the first embodiment of the present technique. A phase difference film (phase difference element) 11 is, for example, a $\lambda$/4 phase difference film. For example, the phase difference film 11 is rectangular. It is preferable that on at least one surface of the phase difference film 11, a hard coat layer 12 be further provided since scratch resistance and chemical resistance can be imparted to the surface of the phase difference film 11. FIG. 1A shows one example in which the hard coat layer 12 is further provided on the surface of the phase difference film 11.
As shown in FIG. 1B, the phase difference film 11 may be belt-shaped as a whole. The phase difference film 11 having such a shape can be produced easily through a roll-to-roll process. Further, when the phase difference film 11 is rolled into a roll shape to form an original roll, handling can be easy.
A relation of an in-plane retardation R0 and a retardation Rth in a thickness direction of the phase difference film 11 satisfies the following expression (1).

$$0.7 \times R0 \leq Rth \leq 1.3 \times R0 \quad (1)$$

R0: $|Nx - Ny| \times d$
Rth: $|((Nx + Ny) /2) - Nz| \times d$
(Nx: refractive index in width direction of phase difference film 11, Ny: refractive index in longitudinal direction of phase difference film 11, Nz: refractive index in thickness direction of phase difference film 11, and d: thickness of phase difference film 11)
When a relation of $0.7 \times R0 \leq Rth \leq 1.3 \times R0$ is satisfied, a change in retardation relative to a tilt angle in a Z-axis direction with R0 serving as an axis can be controlled within $\pm 30\%$. When the change in retardation is controlled within $\pm 30\%$, degradation of visibility caused even by tilting a monitor in the Z-axis direction can be suppressed. Here, a tilt angle in the Z-axis direction means a rotation angle at which a phase difference film is rotated relatively in the Z-axis direction around an in-plane R0 axis as a central axis as shown in FIG. 2. Further, the width direction (crosswise direction (TD: transverse direction)) of the phase difference film 11 is referred to as an x-axis direction, the longitudinal direction (lengthwise direction (MD: machine direction)) of the phase difference film 11 is referred to as a y-axis direction, and the thickness direction of the phase difference film 11 is referred to as a z-axis direction.
An angle formed between an orientation direction of a thermoplastic resin near the surface of the phase difference film 11 and the thickness direction of the phase difference film 11 is smaller than an angle formed between the orientation direction of a thermoplastic resin at the center portion of the phase difference film 11 and the thickness direction of the phase difference film 11. Specifically, the orientation direction of the thermoplastic resin near the surface of the phase difference film 11 is substantially parallel to the thickness direction of the phase difference film 11, while the orientation direction of the thermoplastic resin near the center of the phase difference film 11 is substantially parallel to the in-plane direction of the phase difference film 11. From such a relation, a relation of $0.7 \times R0 \leq Rth \leq 1.3 \times R0$ can be achieved.
When $n_x$, $n_y$, and $n_z$ represent refractive indexes in the x direction, the y direction, and the z direction of the phase difference film 11, respectively, it is preferable that the refractive indexes $n_x$, $n_y$, and $n_z$ satisfy a relation of $n_x > n_y > n_z$. When such a relation is satisfied, the relation of $0.7 \times R0 \leq Rth \leq 1.3 \times R0$ can be achieved.
The thickness of the phase difference film 11 is preferably within a range of 30 $\mu$m or more and 200 $\mu$m or less. When the thickness of the phase difference film 11 is less than 30 $\mu$m, a compression force cannot be sufficiently transferred during a process of producing the phase difference film 11. Therefore, the in-plane retardation R0 sufficient for the phase difference film 11 may not be secured. In addition, the phase difference film itself may be difficult to be handled. In contrast, when the thickness of the phase difference film 11 exceeds 200 $\mu$m, the total thickness of members, such as a layered body, made of the phase difference film 11 may be too large.

The value of the in-plane retardation R0 of the phase difference film 11 is preferably within a range of 50 nm or more and 276 nm or less. When the in-plane retardation R0 is less than 50 nm, a function sufficient for the phase difference film 11 may not be exerted. In contrast, when the in-plane retardation R0 exceeds 276 nm, wavelength dependency increases, and as a result, color unevenness may be caused.

The dimensional change ratio of the phase difference film 11 before and after storage for 1 hour under an environment of 150°C is preferably within a range of -1% or more and 1% or less. When the phase difference film 11 is used as a base film for a transparent electrode by adjusting the dimensional change ratio within a range of - 1% or more and 1% or less, degradation of film quality due to waviness caused by a change in dimension cannot be suppressed, for example, during an annealing treatment of a metal oxide material such as indium tin oxide (ITO).

The dimensional change ratio of the phase difference film 11 before and after storage for 1 hour under an environment of 150°C is defined by the following expression.

$$\text{(Dimensional change ratio)(\%)} = ((\text{dimension of phase}$$
$$\text{difference film after storage under environment} -$$
$$\text{dimension of phase difference film before storage under}$$
$$\text{environment})/(\text{dimension of phase difference film before}$$
$$\text{storage under environment})) \times 100(\%)$$

Among values of dimensions in MD and TD directions, a value having a larger dimensional change ratio is utilized as a value of the dimensional change ratio.

The amount $\Delta$R0 of change in the in-plane retardation R0 of the phase difference film 11 before and after storage for 1 hour under the environment of 150°C preferably satisfies a relation of $\Delta$R0 $\leq$ 25 nm. When the phase difference film 11 is used as a base film for a transparent electrode by adjusting the change amount $\Delta$R0 to 25 nm or less, an initial phase difference can be secured, for example, even after an annealing treatment of a metal oxide material such as indium tin oxide (ITO), and a retardation to be almost designed can be secured.

It is preferable that the phase difference film 11 contain one or two or more kinds of thermoplastic resin. The phase difference film 11 may further contain an additive, if necessary. Examples of the additive may include one or more kinds selected from the group consisting of a thermal stabilizer, an ultraviolet absorber, a plasticizer, a lubricant, an antioxidant, a flame retardant, a colorant, an antistatic agent, a compatibilizer, a crosslinking agent, a thickener, and a filler. As the filler, for example, an inorganic or an organic fine particle can be used.

Examples of the thermoplastic resin used may include a norbornene-based resin, a polyester-based resin (for example, polyethylene terephthalate (PET)), a cycloolefin-based resin, a cellulose resin, a vinyl chloride-based resin, a polycarbonate-based resin, an acrylonitrile-based resin, an olefin-based resin (for example, polyethylene and polypropylene), a polystyrene-based resin, a poly(methyl (meth)acrylate)-based resin, a polysulfone-based resin, a polyarylate-based resin, a polyether sulfone-based resin, and copolymers thereof. A norbornene-based resin is particularly preferred since the retardation can be finely adjusted.

[Configuration of Film Production Device]

FIG. 3 is a schematic view showing one example of a configuration of a film production device used in production of the phase difference film according to the first embodiment of the present technique. The film production device is provided with a die 21, a roller 22, and a roller 23.

The die 21 is a general T-die for extrusion molding, and is used to extrude a molten resin material 24 into a film shape. For example, the resin material 24 contains a thermoplastic resin as described above. The rollers 22 and 23 are configured to nip the resin material 24 extruded from the die 21 into a film shape by a given pressure. The rollers 22 and 23 are configured so as to be rotatable in a given direction. Specifically, the roller 22 is configured so as to be rotatable at an optional rotational speed ratio relative to a rotational speed based on the roller 23 by a rotational power transmission mechanism not shown in the drawing. The surface configurations of the rollers 22 and 23 are not particularly limited, and for example, a mirror surface, an embossed surface, a prism, or a lenticular surface can be optionally selected. The rollers 22 and 23 each have a flow path of a solvent thereinside, and each have a function capable of adjusting the temperature on the surface to a given temperature by an individual temperature adjuster. Materials for the surfaces of the rollers 22 and 23 are not particularly limited, and a metal, a rubber, a resin, an elastomer, or the like can be used.

[Method for Producing Phase difference film]

One example of a method for producing a phase difference film using a film production device having the above-described configuration will be described.

A fed resin material is first molten at a given temperature, and a resin material 24 is extruded through the die 21 into a film shape. The extruded resin material 24 in a molten state is dropped, nipped between the rollers 22 and 23, and compressed and stretched. In the film-shaped resin material 24 obtained by compressing and stretching, a retardation is expressed, and a phase difference film 11 is thereby obtained. The phase difference film 11 is then carried along the roller 23 to a next step, if necessary, and rolled into an original roll shape by a carrier system not shown.

During compressing and stretching, it is preferable that the film-shaped resin material 24 be compressed and stretched in the thickness direction thereof so that a relation of an in-plane retardation R0 and a retardation Rth in the thickness direction satisfies the above expression (1). The compression force in the thickness direction (Z-axis direction) of the film-shaped resin material 24 is preferably 5 N/mm$^2$ or more, and more preferably within a range of 5 N/mm$^2$ or more and 300 N/mm$^2$ or less. When the compression force is less than 5 N/mm$^2$, the material is not sufficiently compressed and stretched, and a desired retardation may not be obtained. A higher compression force is preferred since a retardation is likely to be expressed. However, when the compression force is too high, a rotation load of the rollers increases, running failure may be caused, the device may be broken, and control of desired film thickness may be made difficult. Therefore, a compression force of 300 N/mm$^2$ or less is preferred.

A retardation to be expressed varies depending on the thickness of the resin material 24 which varies depending on the temperature of the resin material 24, the compression force (contact pressure), speed difference, and temperature between the rollers 22 and 23, and the ratio of the extrusion speed of the resin material 24 and the circumferential speed of the roller 23. Expression of a given retardation can be controlled by application of these parameters. Further, a change in dimension of the phase difference film 11 can be controlled.

[Effect]

As described above, according to the first embodiment, the phase difference film 11 as a phase difference element has an in-plane retardation R0 and a retardation Rth in a thickness direction that satisfy the relation of $0.7 \times R0 \leq Rth \leq 1.3 \times R0$. Therefore, a change in retardation caused by tilting in a Z-axis direction can be suppressed. Specifically, degradation of visibility caused even by tilting a monitor (display device) in the Z-axis direction can be suppressed.

The thickness of the phase difference film 11 can be set at the early stage of molding. In order to express a retardation by compressing and stretching at high temperature, a change in the dimension of the phase difference film 11 with time can be reduced as compared with a conventional case where a retardation is expressed by stretching in uniaxial or biaxial direction at a relatively low temperature. In addition, a value of retardation can be controlled by only a nip pressure between the rollers 22 and 23.

<Modifications>

(Modification 1)

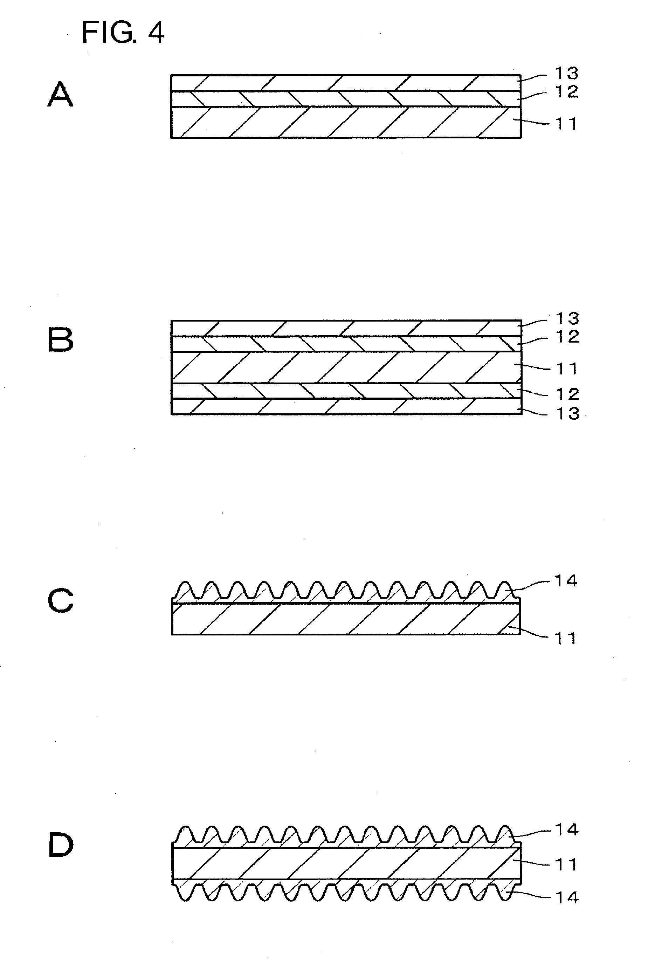

As shown in FIGs. 4A and 4B, a transparent conductive film (transparent conductive element) may be configured using the phase difference film 11 described above as a base film (substrate). Specifically, this transparent conductive film includes the phase difference film (phase difference element) 11 as a base film (substrate) and a transparent conductive layer 13 provided on at least one surface of the phase difference film 11. FIG. 4A shows one example in which the transparent conductive layer 13 is provided on one surface of the phase difference film 11. FIG. 4B shows one example in which the transparent conductive layer 13 is provided on both surfaces of the phase difference film 11. As shown in FIGs. 4A and 4B, a hard coat layer 12 may be further provided between the phase difference film 11 and the transparent conductive layer 13.

As a material for the transparent conductive layer 13, for example, one or more kinds selected from the group consisting of an electrically conductive metal oxide material, a metal material, a carbon material, and a conductive polymer can be used. Examples of the metal oxide material may include indium tin oxide (ITO), zinc oxide, indium oxide, antimony-doped tin oxide, fluorine-doped tin oxide, aluminum-doped zinc oxide, gallium-doped zinc oxide, silicon-doped zinc oxide, zinc oxide-tin oxide, indium oxide-tin oxide, and zinc oxide-indium oxide-magnesium oxide. As the metal material, for example, a metal nanofiller such as a metal nanoparticle and a metal nanowire can be used. Specific examples thereof may include metal such as copper, silver, gold, platinum, palladium, nickel, tin, cobalt, rhodium, iridium, iron, ruthenium, osmium, manganese, molybdenum, tungsten, niobium, tantalum, titanium, bismuth, antimony, and lead, and alloys thereof. Examples of the carbon material may include carbon black, carbon fibers, fullerene, graphene, carbon nanotube, carbon microcoil, and nanohorn. As the conductive polymer, for example, substituted or unsubstituted polyaniline, polypyrrole, polythiophene, and a (co)polymer of one or two kinds selected from these can be used.

As a method for forming the transparent conductive layer 13, for example, a PVD method such as a sputtering method, a vacuum evaporation method, and an ion plating method, a CVD method, a coating method, or a printing method can be used. The transparent conductive layer 13 may be a transparent electrode having a predetermined electrode pattern. Examples of the electrode pattern may include, but not limited to, a strip shape.

As a material for the hard coat layer 12, an ionizing radiation curable resin to be cured by light or electron beam, or a thermosetting resin to be cured by heat is preferably used, and a photosensitive resin to be cured by ultraviolet rays is particularly preferably used. As such a photosensitive resin, an acrylate-based resin such as urethane acrylate, epoxy acrylate, polyester acrylate, polyol acrylate, polyether acrylate, and melamine acrylate can be used.

For example, a urethane acrylate resin is obtained by reacting polyester polyol with an isocyanate monomer or a prepolymer to obtain a product, followed by a reaction of the product with an acrylate- or methacrylate-based monomer having a hydroxyl group. The thickness of the hard coat layer 12 is preferably 1 $\mu$m to 20 $\mu$m, but is not particularly limited to this range.

[Modification 2]

As shown in FIGs. 4C and 4D, a moth eye structure 14 may be provided as an antireflective layer on at least one surface of the phase difference film 11 described above. FIG. 4A shows one example in which the moth eye structure 14 is provided on one surface of the phase difference film 11. FIG. 4B shows one example in which the moth eye structure 14 is provided on both surfaces of the phase difference film 11. An antireflective layer provided on the surface of the phase difference film 11 is not limited to the moth eye structure 14. A conventionally known antireflective layer such as a low refractive index layer may be used.

<2. Second Embodiment>

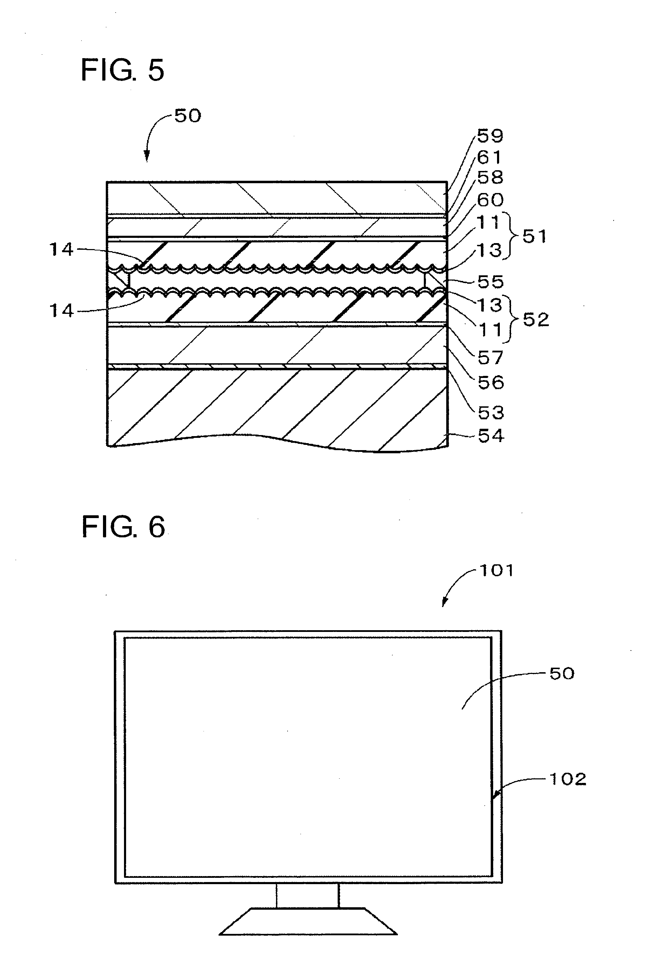

FIG. 5 is a schematic cross-sectional view showing one example of a configuration of a touch panel according to a second embodiment of the present technique. This touch panel (input device) 50 is a so-called resistive film-type touch panel. The resistive film-type touch panel may be any of an analogue resistive film-type touch panel and a digital resistive film-type touch panel.

The touch panel 50 is provided with a first transparent conductive film 51 and a second transparent conductive film 52 opposite to the first transparent conductive film 51. The first transparent conductive film 51 and the second transparent conductive film 52 are bonded to each other through a bonding portion 55 that is disposed between peripheral portions thereof. As the bonding portion 55, for example, an adhesive paste or an adhesive tape may be used. For example, the touch panel 50 is bonded to a display device 54 through a bonding layer 53. As a material for the bonding layer 53, for example, an acrylic, rubber-based, or silicone-based adhesive can be used. From the viewpoint of transparency, an acrylic adhesive is preferred.

The touch panel 50 is further provided with a polarizer 58 that is bonded to a face of the first transparent conductive film 51 on a touch side through a bonding layer 60. As the first transparent conductive film 51 and/or the second transparent conductive film 52, the transparent conductive film (transparent conductive element) according to modification 1 of the first embodiment can be used. Herein, as the phase difference film 11 as a base film (substrate), a $\lambda/4$ phase difference film in which the phase difference of the phase difference film 11 according the first embodiment is set to $\lambda/4$ can be used. When the polarizer 58 and the phase difference film 11 are thus used, the reflectance decreases, and the visibility can be improved.

It is preferable that a moth eye structure 14 be provided on each opposite surface of the first transparent conductive film 51 and the second transparent conductive film 52, that is, the surface on which a transparent conductive layer 13 is provided. This is because optical characteristics (for example, reflection characteristics and transmission characteristics) of the first transparent conductive film 51 and the second transparent conductive film 52 can be improved. From the viewpoint of improved optical characteristics, it is preferable that the transparent conductive layer 13 be provided along the surface of the moth eye structure 14.

It is preferable that the touch panel 50 be further provided with a mono- or multi-layered antireflective layer (not shown) on the face of the first transparent conductive film 51 on the touch side. This is because the reflectance decreases and the visibility can be improved.

From the viewpoint of improved scratch resistance, it is preferable that the touch panel 50 be further provided with a hard coat layer on the surface of the first transparent conductive film 51 on the touch side. It is preferable that soil resistance be imparted to the surface of the hard coat layer.

The touch panel 50 may be further provided with a front panel (surface member) 59 that is bonded to the face of the first transparent conductive film 51 on the touch side through a bonding layer 61. The touch panel 50 may be further provided with a glass substrate 56 that is bonded to a face of the second transparent conductive film 52 to be bonded to a display device 54 through a bonding layer 57.

It is preferable that the touch panel 50 be further provided with a plurality of structures on the face of the second transparent conductive film 52 to be bonded to the display device 54. This is because adhesion between the touch panel 50 and the bonding layer 53 can be improved by the anchor effect of the plurality of structures. It is preferable that the structures be a moth eye structure since interface reflection can be suppressed.

As the display device 54, for example, various types of display device such as a liquid crystal display, a cathode ray tube .(CRT) display, a plasma display panel (PDP), an electro luminescence (EL) display, and a surface-conduction electron-emitter display (SED) can be used.

<3. Third Embodiment>

In an electronic apparatus according to a third embodiment of the present technique, the input device 50 according to the second embodiment is provided as a display portion. Hereinafter, examples of the electronic apparatus according to the third embodiment of the present technique will be described.

FIG. 6 is an external view showing one example of a television device as the electronic apparatus. A television device 101 is provided with a display portion 102, and the display portion 102 is provided with the touch panel 50 according to the second embodiment.

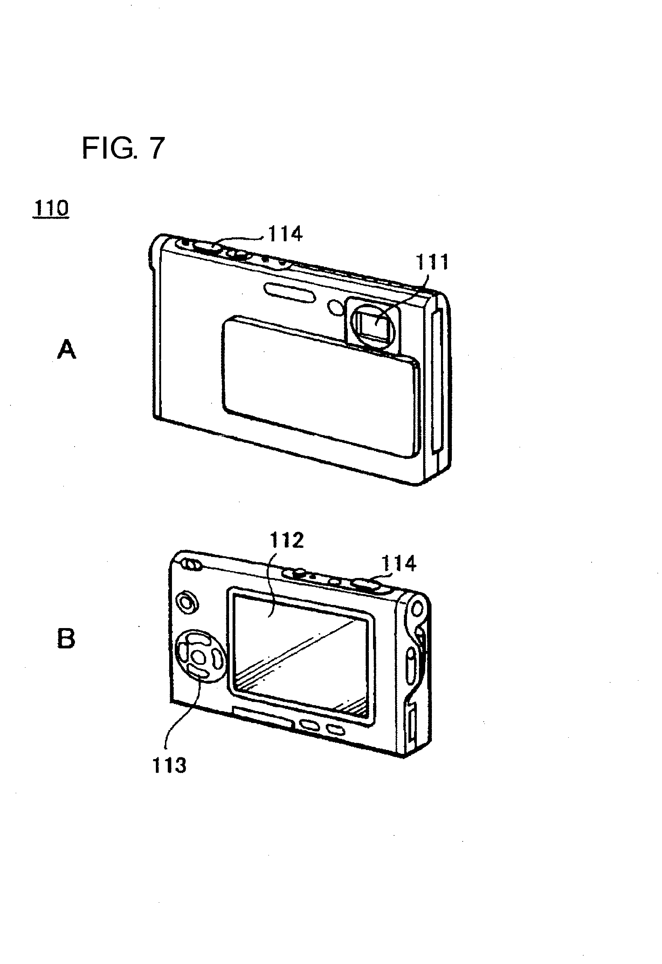

FIGs. 7A and 7B are external views showing one example of a digital camera as the electronic apparatus. FIG. 7A is the external view seen from a front side of the digital camera. FIG. 7B is the external view seen from a back side of the digital camera. A digital camera 110 is provided with a light-emitting portion 111 for flash, a display portion 112, a menu switch 113, a shutter button 114, and the like, and the display portion 112 is provided with the touch panel 50 according to the second embodiment.

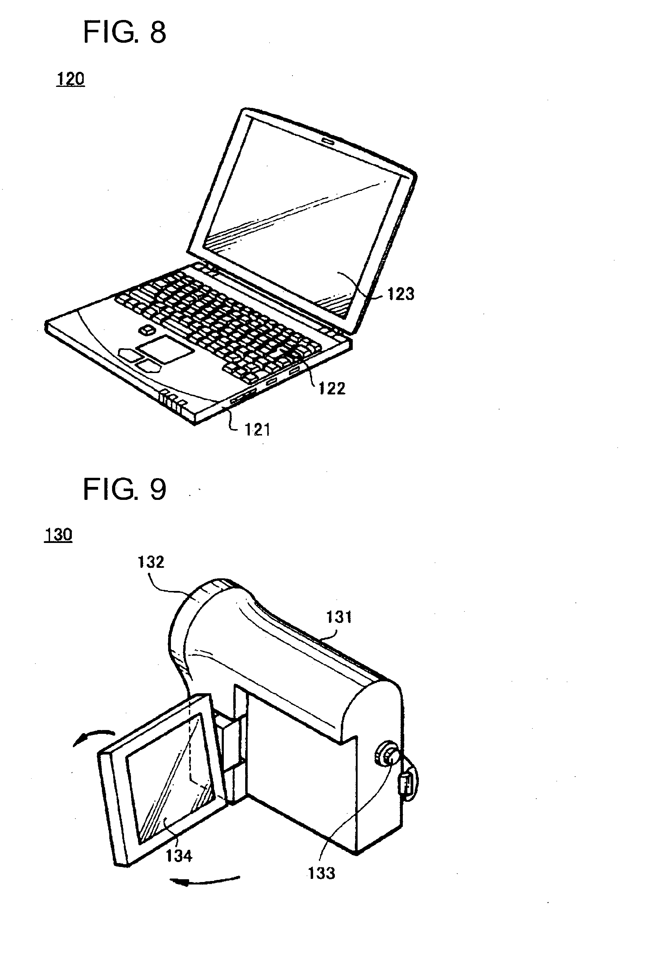

FIG. 8 is an external view showing one example of a note-type personal computer as the electronic apparatus. A note-type personal computer 120 is provided with a keyboard 122 used to input characters and the like, a display portion 123 for displaying an image, and the like in a body 121, and the display portion 123 is provided with the touch panel 50 according to the second embodiment.

FIG. 9 is an external view showing one example of a video camera as the electronic apparatus. A video camera 130 is provided with a body portion 131, a lens 132 for photographing an object on a side face that faces forward, a start/stop switch 133 for photographing, a display portion 134, and the like, and the display portion 134 is provided with the touch panel 50 according to the second embodiment.

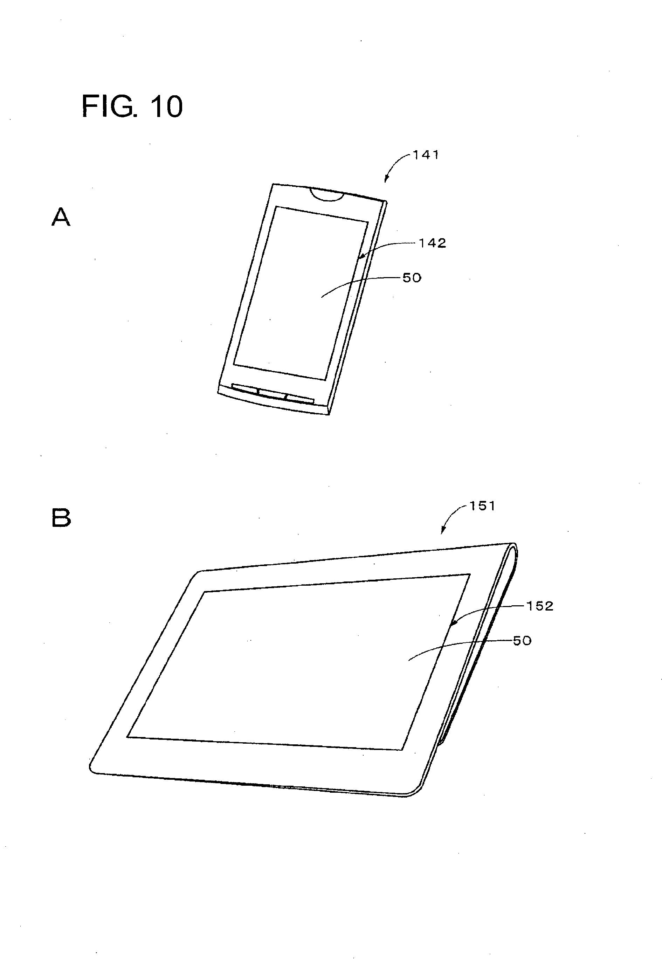

FIG. 10A is an external view showing one example of a mobile phone as the electronic apparatus. A mobile phone 141 is a so-called smartphone, and a display portion 142 thereof is provided with the touch panel 50 according to the second embodiment.

FIG. 10B is an external view showing one example of a tablet computer as the electronic apparatus. In a tablet computer 151, a display portion 152 is provided with the touch panel 50 according to the second embodiment.

[Examples]

Hereinafter, the present technique will be specifically described by way of Examples, and the present technique is not limited to these Examples.

In Examples 1 to 5 described below, a film production device shown in FIG. 3 was used as a film production device. In Comparative Example 1, a device provided with a longitudinal axial stretching device of stretching a film extruded from a T die in a uniaxial direction was used as a film production device.

(Example 1)

As a thermoplastic resin material, a norbornene-based resin (glass transition point Tg: 170°C) was first prepared. This resin material was then extruded from a T die 21 of a film production device into a film shape with a thickness of 100 $\mu$m. After that, the extruded film was nipped between rollers 22 and 23, and compressed and stretched at a contact pressure of 88 $N/mm^2$, to obtain a phase difference film. At this time, the surface temperature of the roller 22 was set to 40°C, the surface temperature of the roller 23 was set to 60°C, and the rotational speed was set so that the peripheral speed was about 5 to about 10 m/min.

(Example 2)

A phase difference film was obtained in the same manner as in Example 1 except that the resin material was extruded by the film production device into a film shape with a thickness of 30 $\mu$m and the film was compressed and stretched at a contact pressure of 120 N/mm$^2$.

(Example 3)

A phase difference film was obtained in the same manner as in Example 1 except that the resin material was extruded by the film production device into a film shape with a thickness of 200 $\mu$m and the film was compressed and stretched at a contact pressure of 40 N/mm$^2$.

(Example 4)

A phase difference film was obtained in the same manner as in Example 1 except that the resin material was extruded by the film production device into a film shape with a thickness of 100 $\mu$m and the film was compressed and stretched at a contact pressure of 5 N/mm$^2$.

(Example 5)

A phase difference film was obtained in the same manner as in Example 1 except that the resin material was extruded by the film production device into a film shape with a thickness of 100 $\mu$m and the film was compressed and stretched at a contact pressure of 150 N/mm$^2$.

(Comparative Example 1)

A phase difference film was obtained in the same manner as in Example 1 except that the resin material was extruded by the film production device into a film shape with a thickness of 100 $\mu$m and the film was stretched in a uniaxial direction without compressing and stretching.

(Comparative Example 2)

The resin material was only extruded by the film production device into a film shape with a thickness of 100 $\mu$m to obtain a film.

(Evaluation)

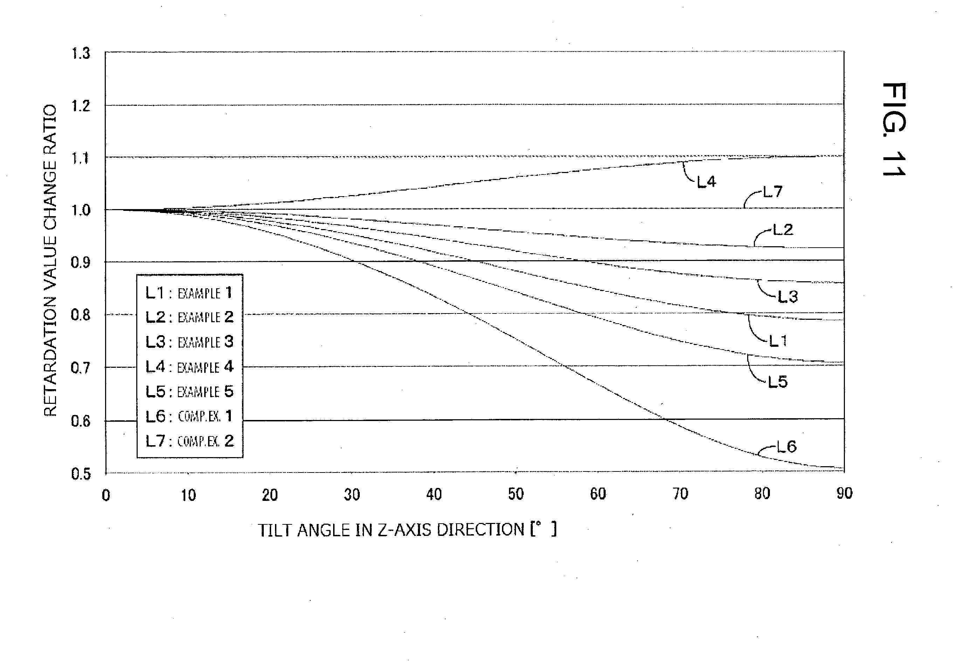

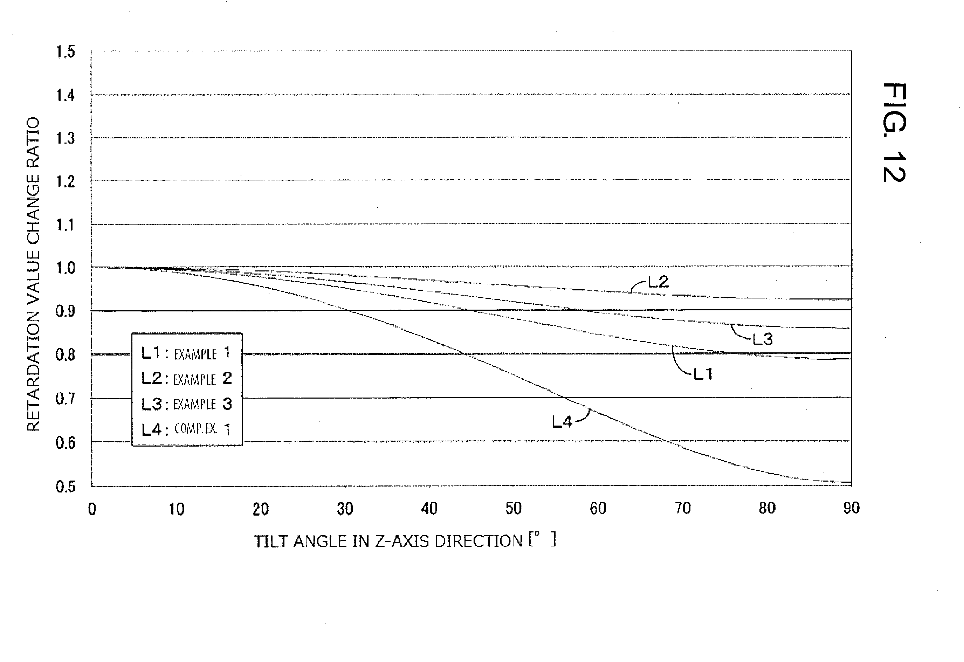

The retardation, dimensional change ratio, retardation change amount, and tilt angle-dependency of the retardation of each of the phase difference films thus obtained in Examples 1 to 5 and Comparative Examples 1 and 2 were evaluated as follows. The results are shown in Table 1 and FIGs. 11 and 12.

(Retardation)

An in-plane retardation R0 and a retardation Rth in a thickness direction of a phase difference film were measured by a phase difference film/optical material inspection system (manufactured by Otsuka Electronics Co., Ltd., trade name: RETS-100).

(Dimensional Change Ratio)

A dimensional change ratio of a phase difference film before and after storage under an environment was determined as follows. Dimensions in MD and TD directions of the phase difference film (referred to as "dimension of phase difference film before storage under environment") were measured. Dimensions in MD and TD directions of the phase difference film after storage for 1 hour under an environment of 150°C (referred to as "dimension of phase difference film after storage under environment") were then measured. The dimensional change ratio of the phase difference film before and after storage under the environment was calculated from the following expression.

$$\text{(Dimensional change ratio)(\%) = ((dimension of phase difference film after storage under environment - dimension of phase difference film before storage under environment)/(dimension of phase difference film before storage under environment)) × 100 (\%)}$$

Among values of dimensions in MD and TD directions, a value having a larger change was adopted as a value of the dimensional change ratio.

(Change in Retardation)

An amount of change in the in-plane retardation R0 of the phase difference film before and after storage under the environment was determined as follows. The in-plane retardation R0 of the phase difference film (referred to as "retardation R0 before storage under environment") was measured. The in-plane retardation R0 of the phase difference film after storage for 1 hour under an environment of 150°C (referred to as "in-plane retardation R0 after storage under environment") was then measured. The amount of change in the in-plane retardation R0 of the phase difference film before and after storage under the environment was calculated from the following expression. The retardation R0 before storage under the environment and the retardation R0 after storage under the environment were determined by the device that was the same as in the evaluation of a retardation described above.

$$\text{(Amount of change in in-plane retardation R0) = (retardation R0 before storage under environment) - (retardation R0 after storage under environment)}$$

(Comprehensive Evaluation)

From evaluation results of the retardation, dimensional change ratio, and amount of change in retardation, each phase difference film was comprehensively evaluated in accordance with the following criteria. The results are shown in Table 1.
Excellent: The in-plane retardation R0 is 50 nm or more, and the film can be used as a phase difference film. The Rth/R0 ratio falls within a range of 0.7 or more and 1.3 or less, and a change in tilt of the retardation can be controlled within 30%. The dimensional change ratio for 1 hour at 150°C falls within ±1%, and the amount of change in the in-plane retardation R0 is 25 nm or less. The initial characteristics can be substantially maintained.
Good: The in-plane retardation R0 is 50 nm or more, and the film can be used as a phase difference film. The Rth/R0 ratio falls within a range of 0.7 or more and 1.3 or less, and a change in tilt of the retardation can be controlled within 30%.
Poor: The in-plane retardation R0 is less than 50 nm, and the film cannot be used as a phase difference film. Alternatively, the ratio Rth/R0 does not fall within a range of 0.7 or more and 1.3 or less, a change of the retardation caused by tilting is large, and a change in tilt of the retardation exceeds 30%.

(Tilt Angle-Dependency of Retardation)

A ratio of change in retardation relative to a tilt angle in the Z-axis direction was determined from a simulation. The results are shown in FIGs. 11 and 12.

[Table 1]

| | R0 (nm) | Rth (nm) | Rth / R0 | DIMENSIONAL CHANGE RATIO AT 150°C (%) | AMOUNT OF R0 CHANGE AT 150°C (nm) | JUDGMENT |
|---|---|---|---|---|---|---|
| EXAMPLE 1 | 140 | 115 | 0.82 | 0.2 | 10 | Excellent |
| EXAMPLE 2 | 130 | 120 | 0.92 | 0.4 | 10 | Excellent |
| EXAMPLE 3 | 140 | 120 | 0.86 | 0.2 | 10 | Excellent |
| EXAMPLE 4 | 50 | 55 | 1.10 | 0.2 | 5 | Excellent |
| EXAMPLE 5 | 276 | 195 | 0.71 | 0.3 | 15 | Excellent |
| COMPARATIVE EXAMPLE 1 | 138 | 70 | 0.51 | 2.0 | 35 | Poor |
| COMPARATIVE EXAMPLE 2 | 5 | 5 | 1.00 | 0.2 | 1 | Poor |

From the evaluation results, it is found as follows.

When the retardation Rth in the thickness direction is controlled to 0.7 times or more and 1.3 times or less of the in-plane retardation R0 ($0.7 \times R0 \leq Rth \leq 1.3 \times R0$), a change in retardation caused by tilting in the Z-axis direction can be reduced as compared with a change in the in-plane retardation.

In a phase difference film in which a retardation is imparted by compressing and stretching, the dimensional change ratio and the change in the in-plane retardation R0 can be reduced as compared with a phase difference film in which a retardation is imparted by stretching in a uniaxial direction.

(Test Example 1)

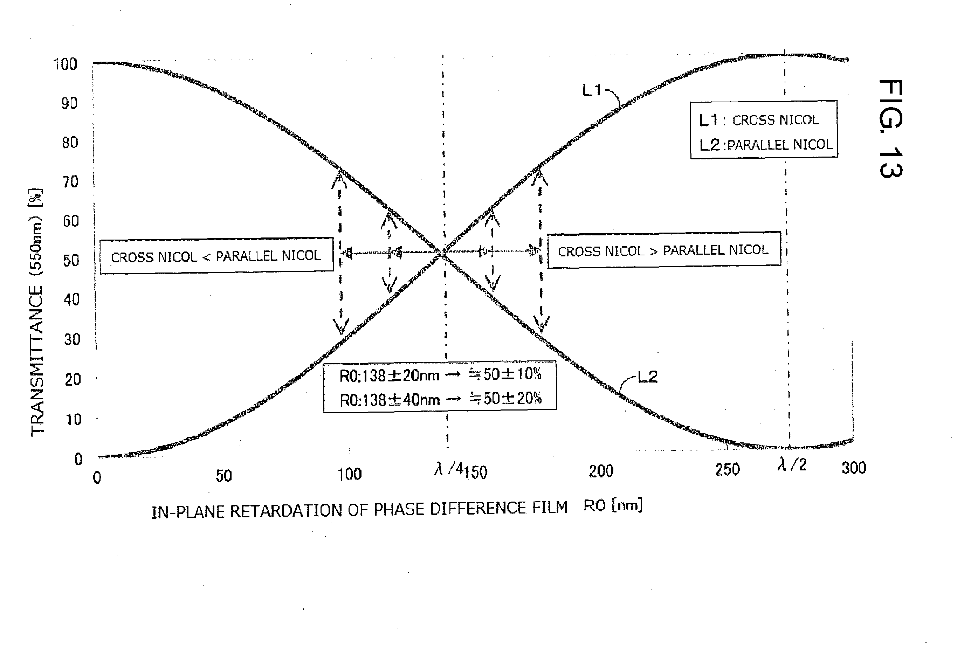

A layered body having the following configuration was assumed. A change in transmittance relative to the in-plane retardation R0 was determined from a simulation during insertion of a phase difference film. The results are shown in FIG. 13. The transmittance is a transmittance of light with a wavelength of 550 nm.

(Configuration of Layered Body)

First polarizer/phase difference film/second polarizer

Herein, the first and second polarizers were in a cross nicol state. The first polarizer and the phase difference film were fixed in such an arrangement that the absorption axis of the first polarizer was at an angle of 45° relative to the slow axis of the phase difference film.

(Test Example 2)

A change in transmittance relative to the in-plane retardation R0 was determined by a simulation during insertion of a phase difference film in the same manner as in Test Example 1 except that the first polarizer and the second polarizer were in a parallel nicol state. The results are shown in FIG. 13.

FIG. 13 is a graph showing the results of the simulation in each of Test Examples 1 and 2. As seen from FIG. 13, when the change in retardation falls within $138 \pm 40$ nm (about $\pm 30\%$) at an in-plane retardation R0 of the phase difference film of $\lambda/4$, a remarkable decrease in visibility can be suppressed.

The embodiments of the present technique are specifically described above, but the present technique is not limited to the embodiments, and can be modified on the basis of the technical concept of the present technique.

For example, the configurations, methods, steps, shapes, materials, and values cited in the embodiments are merely examples and different configurations, methods, steps, shapes, materials, and values may be used if necessary.

The configurations, methods, steps, shapes, materials, and values of the embodiments may be combined with one another without departing from the spirit of the present technique.

In the embodiments, one example in which the present technique is applied to a resistive film-type touch panel as an input device is described, but the present technique is not limited to this example. The present technique can also be applied to another input device such as a capacitive touch panel.

In the present technique, the following configurations can be adopted.

(1) A phase difference element having an in-plane retardation R0 and a retardation Rth in a thickness direction that satisfy the following expression (1):

$$0.7 \times R0 \le Rth \le 1.3 \times R0 \quad (1),$$

R0: |Nx - Ny| × d, Rth: |((Nx + Ny)/2) - Nz| × d
(Nx: refractive index in width direction, Ny: refractive index in longitudinal direction, Nz: refractive index in thickness direction, and d: element thickness).

(2) The phase difference element according to (1), wherein the thickness is within a range of 30 μm or more and 200 μm or less.

(3) The phase difference element according to (1) or (2), wherein a value of the in-plane retardation R0 is within a range of 50 nm or more and 276 nm or less.

(4) The phase difference element according to any one of (1) to (3), wherein a dimensional change ratio before and after storage for 1 hour under an environment of 150°C is within a range of -1% or more and 1% or less.

(5) The phase difference element according to any one of (1) to (3), wherein a change amount in the in-plane retardation R0 before and after storage for 1 hour under an environment of 150°C is within a range of the R0 change amount ≤ 25 nm.

(6) The phase difference element according to any one of (1) to (5), containing a norbornene-based resin.

(7) A transparent conductive element provided with the phase difference element according to any one of (1) to (6) as a substrate.

(8) A transparent conductive element including:

a phase difference element; and
a transparent conductive layer, wherein
the phase difference element has an in-plane retardation R0 and a retardation Rth in a thickness direction that satisfy the following expression (1):

$$0.7 \times R0 \le Rth \le 1.3 \times R0 \quad (1),$$

R0: |Nx - Ny| × d,
Rth: |((Nx + Ny) /2) - Nz| × d
(Nx: refractive index in width direction, Ny: refractive index in longitudinal direction, Nz: refractive index in thickness direction, and d: element thickness).

(9) The transparent conductive element according to (8), wherein the transparent conductive layer is a transparent electrode.

(10) The transparent conductive element according to (8) or (9), wherein the transparent conductive layer contains indium tin oxide.

(11) The transparent conductive element according to (8) or (9), wherein the transparent conductive layer contains a metal nanofiller.

(12) The transparent conductive element according to (11), wherein the metal nanofiller is a metal nanowire.

(13) An input device provided with the transparent conductive element according to any one of (7) to (12).

(14) A display device provided with the phase difference element according to any one of (1) to (6).

(15) An electronic apparatus provided with the phase difference element according to any one of (1) to (6).

(16) A method for producing a phase difference element, the method including compressing and stretching in a thickness direction of the element so that an in-plane retardation R0 and a retardation Rth in a thickness direction satisfy the following expression (1):

$$0.7 \times R0 \le Rth \le 1.3 \times R0 \quad (1),$$

R0: |Nx - Ny| × d, Rth: |((Nx + Ny)/2) - Nz| × d
(Nx: refractive index in width direction, Ny: refractive index in longitudinal direction, Nz: refractive index in thickness direction, and d: element thickness).

(17) The method for producing a phase difference element according to (16), wherein a compression force in the thickness direction is 5 N/mm$^2$ or more.

(18) An input device provided with a transparent conductive element, the transparent conductive element including:

a phase difference element, and
a transparent conductive layer, wherein
the phase difference element has an in-plane retardation R0 and a retardation Rth in a thickness direction that satisfy the following expression (1):

$$0.7 \times R0 \leq Rth \leq 1.3 \times R0 \quad (1),$$

R0: |Nx - Ny| $\times$ d,
Rth: |((Nx + Ny)/2) - Nz| $\times$ d
(Nx: refractive index in width direction, Ny: refractive index in longitudinal direction, Nz: refractive index in thickness direction, and d: element thickness).

(19) A display device provided with a phase difference film, wherein
the phase difference element has an in-plane retardation R0 and a retardation Rth in a thickness direction that satisfy the following expression (1):

$$0.7 \times R0 \leq Rth \leq 1.3 \times R0 \quad (1),$$

R0: |Nx - Ny| $\times$ d,
Rth: |((Nx + Ny) /2) - Nz| $\times$ d
(Nx: refractive index in width direction, Ny: refractive index in longitudinal direction, Nz: refractive index in thickness direction, and d: element thickness).

(20) An electronic apparatus provided with a phase difference film, wherein the phase difference element has an in-plane retardation R0 and a retardation Rth in a thickness direction that satisfy the following expression (1):

$$0.7 \times R0 \leq Rth \leq 1.3 \times R0 \quad (1),$$

R0: |Nx - Ny| $\times$ d,
Rth: |((Nx + Ny)/2)- Nz| $\times$ d
(Nx: refractive index in width direction, Ny: refractive index in longitudinal direction, Nz: refractive index in thickness direction, and d: element thickness). Reference Signs List

| 11 | phase difference film |
| 12 | hard coat layer |
| 13 | transparent conductive layer |
| 14 | moth eye structure |
| 21 | die |
| 22, 23 | roller |
| 50 | touch panel |
| 101 | television device |
| 110 | digital camera |
| 120 | note-type personal computer |
| 130 | video camera |
| 141 | mobile phone |
| 151 | tablet computer |

**Claims**

1. A phase difference element having an in-plane retardation R0 and a retardation Rth in a thickness direction that satisfy the following expression (1):

$$0.7 \times R0 \leq Rth \leq 1.3 \times R0 \quad (1),$$

R0: $|Nx - Ny| \times d$,
Rth: $|((Nx + Ny)/2) - Nz| \times d$
(Nx: refractive index in width direction, Ny: refractive index in longitudinal direction, Nz: refractive index in thickness direction, and d: element thickness).

2. The phase difference element according to claim 1, wherein a thickness is within a range of 30 $\mu$m or more and 200 $\mu$m or less.

3. The phase difference element according to claim 1 or 2, wherein a value of the in-plane retardation R0 is within a range of 50 nm or more and 276 nm or less.

4. The phase difference element according to any one of claims 1 to 3, wherein a dimensional change ratio before and after storage for 1 hour under an environment of 150°C is within a range of -1% or more and 1% or less.

5. The phase difference element according to any one of claims 1 to 3, wherein a change amount in the in-plane retardation R0 before and after storage for 1 hour under an environment of 150°C is within a range of the R0 change amount $\leq$ 25 nm.

6. The phase difference element according to any one of claims 1 to 5, comprising a norbornene-based resin.

7. A transparent conductive element provided with the phase difference element according to any one of claims 1 to 6 as a substrate.

8. A transparent conductive element comprising:

   a phase difference element, and
   a transparent conductive layer, wherein
   the phase difference element has an in-plane retardation R0 and an retardation Rth in a thickness direction that satisfy the following expression (1) :

$$0.7 \times R0 \leq Rth \leq 1.3 \times R0 \quad (1),$$

R0: $|Nx - Ny| \times d$,
Rth: $|((Nx + Ny)/2) - Nz| \times d$
(Nx: refractive index in width direction, Ny: refractive index in longitudinal direction, Nz: refractive index in thickness direction, and d: element thickness).

9. The transparent conductive element according to claim 8, wherein the transparent conductive layer is a transparent electrode.

10. The transparent conductive element according to claim 8 or 9, wherein the transparent conductive layer contains indium tin oxide.

11. The transparent conductive element according to claim 8 or 9, wherein the transparent conductive layer contains a metal nanofiller.

12. The transparent conductive element according to claim 11, wherein the metal nanofiller is a metal nanowire.

**13.** An input device provided with the transparent conductive element according to any one of claims 7 to 12.

**14.** A display device provided with the phase difference element according to any one of claims 1 to 6.

**15.** An electronic apparatus provided with the phase difference element according to any one of claims 1 to 6.

**16.** A method for producing a phase difference element, the method comprising compressing and stretching in a thickness direction of the element so that an in-plane retardation R0 and a retardation Rth in a thickness direction satisfy the following expression (1):

$$0.7 \times R0 \leq Rth \leq 1.3 \times R0 \quad (1),$$

R0 : |Nx - Ny| $\times$ d,
Rth: |((Nx + Ny)/2) - Nz| $\times$ d
(Nx: refractive index in width direction, Ny: refractive index in longitudinal direction, Nz: refractive index in thickness direction, and d: element thickness).

**17.** The method for producing a phase difference element according to claim 16, wherein a compression force in the thickness direction is 5 N/mm$^2$ or more.

# FIG. 1

A

12

11

B

11

# FIG. 2

# FIG. 3

FIG. 4

A

13
12
11

B

13
12
11
12
13

C

14
11

D

14
11
14

# FIG. 5

# FIG. 6

## FIG. 7

110

A

114
111

B

112
114
113

## FIG. 8

120

123

122

121

## FIG. 9

130

132

131

134

133

# FIG. 10

A

141
142
50

B

151
152
50

# FIG. 11

FIG. 12

# FIG. 13

## INTERNATIONAL SEARCH REPORT

| | International application No. |
|---|---|
| | PCT/JP2013/070867 |

**A. CLASSIFICATION OF SUBJECT MATTER**
*G02B5/30*(2006.01)i, *G02F1/1333*(2006.01)i, *G02F1/13363*(2006.01)i

According to International Patent Classification (IPC) or to both national classification and IPC

**B. FIELDS SEARCHED**

Minimum documentation searched (classification system followed by classification symbols)
G02B5/30, G02F1/1333, G02F1/13363

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho    1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-287218 A  (Fujifilm Corp.), 27 November 2008 (27.11.2008), claims; paragraphs [0001], [0104], [0111], [0185] & US 2009/0042005 A1    & KR 10-2008-0094612 A & CN 101290358 A        & TW 200906598 A | 1-3,6 |
| X Y | JP 2012-113478 A  (Gunze Ltd.), 14 June 2012 (14.06.2012), claims; paragraphs [0020] to [0022], [0050], [0052] (Family: none) | 1-10,13-17 11-12 |
| Y | JP 2012-8255 A  (Fujifilm Corp.), 12 January 2012 (12.01.2012), claims (Family: none) | 11-12 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2013 (09.09.13) | 24 September, 2013 (24.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005091598 A
- JP 2005099848 A